# EUROPEAN PATENT SPECIFICATION

(11) **EP 4 493 861 B1**
(45) Date of publication and mention of the grant of the patent: **12.08.2026**
(21) Application number: 23710267.8
(22) Date of filing: 07.03.2023
(51) Int. Cl.: F24H 1/18, F24H 4/02, F24F 13/22, F24H 9/02, F24H 9/06, F24H 9/16, F24H 4/04, B29K 105/04

(54) **CAP ELEMENT WITH BUFFER CHANNELS**
DECKELELEMENT MIT PUFFERKANÄLEN
ÉLÉMENT DE CAPUCHON AVEC CANAUX TAMPONS

(30) Priority: 14.03.2022 EP 22161873; 21.03.2022 EP 22163167; 21.03.2022 EP 22163164; 01.04.2022 EP 22166330; 01.04.2022 EP 22166331; 01.04.2022 EP 22166332; 06.12.2022 EP 22211748
(43) Date of publication of application: 22.01.2025
(73) Proprietor: BDR Thermea Group B.V., 7332 BD Apeldoorn (NL)
(72) Inventor: KIEFFER, Damien, 7332 BD Apeldoorn (NL); CHASSAGNARD, Benjamin, 7332 BD Apeldoorn (NL); CROUZET, François, 7332 BD Apeldoorn (NL); ANTOINE, Florian, 7332 BD Apeldoorn (NL)
(74) Representative: Grabovac, Dalibor
(86) International application number: PCT/EP2023/055638
(87) International publication number: WO 2023/174737

(56) References cited:
- EP-A1- 2 775 227
- EP-A1- 3 462 103
- WO-A1-2015/004101
- DE-T5- 112019 006 743

## Description

The invention relates to a cap element for a heating device and to a heating device system comprising said cap element. Also, the invention relates to a use of said cap element in a heating device system.

A heating device like a heat pump is a device able to warm a closed space of a building or to warm domestic hot water by transferring thermal energy from a source to another. An air-source heat pump water heater is a device using the heat pump technology to use energy from air to heat the domestic water contained in a tank.

A hot water tank for the production of hot water for heating or domestic hot water is composed of two main elements: a tank and a thermal insulation. The thermal insulation is usually achieved by one of two means: the installation of parts around the tank (adhesive foam parts, adhesive insulation etc.) or the injection of insulating foam into an outer casing. Insulating foam injection is achieved by injecting chemical components that react together via a chemical reaction. This chemical reaction causes the solid produced to expand to such an extent that the volume of foam obtained is much greater than the volume of the components injected separately.

The injection process is a complex one and many factors create variability in the volume required and the volume injected, i.e., tank geometry tolerance, casing geometry tolerance, ambient air temperature, temperature of the chemical components of the insulation, concentration of the components, nature of the components, precision of the injection machine, etc.

As a result, the product can end up with a lack of insulating foam (reduced thermal performance and deformation of the casing) or an excess of insulating foam (aesthetic degradation and constraint for the assembly of the other components). The mastery of the insulation injection process is therefore a major element that allows the production of a high-performance and functional device.

At present, this control requires a significant follow-up in production and it is commonly used to carry out an over-injection and to remove by a mechanical action the overflow of foam.

When water heaters are thermally insulated by injecting foam insulation between the casing and the tank, generally the cap at the top of the casing is provided with several vents. The vents serve to evacuate the gases produced during the chemical reaction of the insulating foam. In general, several vents are provided (two to sixteen in general) and are positioned in a distributed way on the high points of the injected zone. They are made by small diameter holes (generally in the order of 1 to 3 mm) in the thin cap (generally in the order of 1 to 2.5 mm). Even with a mastered industrial process, it is empirically identified that the variability of the various elements is generally between 2 cm³ and 30 cm³. In order to avoid a lack of thermal performance and deformation of the case, it is accepted that the products are over-injected and the excess material is removed when it is too large.

EP2775227A1 describes a sealing element for a cover for a heating device. The cover is placed on top of a tank and casing arrangement. The sealing element comprises ribs which stop the upward flow of foam insulation during injection of foam insulation between the tank and the casing.

EP3462103A1 describes an arrangement for supporting a heating device on top of a tank, using the insulation around the tank as a supportive structure. A support plate placed on the insulation provides a base for the heating device and holes in the support plate allow pipes to run between the tank and heating device.

DE112019006743T5 describes a cover element for a heating device. The cover element includes various angled support structures for pipework.

WO2015/004101A1 describes a heat pump device with an improved cold compartment for an evaporator.

It is therefore desirable to obtain a way to efficiently thermally isolate the water tank with foam injection without the necessity of follow-up in the production.

The object is solved by a cap element for a heating device, the heating device including a water tank located in a casing, wherein the cap element is placeable in or on the casing for closing said casing, the cap element comprising:
at least a buffer channel, to buffer and compensate for injection volume differences during insulation of the heating device by injection of insulation foam between the water tank and the casing, and extending through a cap element material from a first surface to a second surface of the cap element, the second surface facing the water tank, wherein the buffer channel (5) has a volume in the range between 0,5 cm³ to 20 cm³, in particular 0,5 cm³ to 12 cm³, in particular 2 cm³ to 8 cm³.

The cap element can be a top element of the casing or can be any other closing element located for example at the base or at the side of the casing. In particular, the cap element can be the aesthetic top cap of a product or the base of other components, in particular the base of a heat pump in the case of a water heater. It is noted that in case the cap element is not located on the top of the casing but for example at the base, the product can be assembled (at least partially) upside down. In that case, the buffer channel will be at the top during insulation phase but at the bottom in its installation position.

Advantageously, the buffer channel in the cap element allows to buffer and compensate for injection volume differences when insulating the water tank with a specific material, such as foam. The excess of insulating material can be received by the buffer channel by entering the inlet opening that is located on the surface of the cap element facing the water tank, i.e. the surface facing the internal space of the casing that is filled with the insulating material. In particular, compared to the prior art vents present in the top cap of the casing used for gas escaping, the dimension of the cross sectional area of the buffer channel allows a collection of a great amount of excess of insulating material, thereby avoiding the problem related to a refinement of foam due to over-injection.

The buffer channel can be advantageously integrated into moulded parts, particularly for injected or expanded parts of the cap element. The dimensions are compatible with the injection moulding tools. Thanks to the presence of these buffer channels, the presence of foam balls is avoided on the aesthetic or functional parts of the outer part of the cap element, thereby also avoiding production rejects.

According to an example, a cross sectional area of the buffer channel is greater than 10 mm² and in particular ranges between 10 mm² and 115 mm². the inlet opening is circular having a diameter comprised between 3 and 13 mm, preferably between 11 mm and 13 mm, in particular 12 mm. This dimension is sensibly larger than the dimensions of the inlet openings of prior art vents. In particular, the dimension on the inlet opening of the buffer channel is almost 4 times bigger than that of prior art vents. As a matter of fact, prior art vents are basically used for gas discharge. Even if in principle a quantity of insulating material could be pushed into the prior art vents during the foam injection, this quantity would be very limited and would not help to eliminate the problem related to a refinement of foam due to over-injection. In addition, the typical density of the insulating material, such as foam, would prevent a smooth passage of the insulating material into a small inlet opening, such as that of prior art vents.

The inlet opening can have a different shape. For example, the inlet opening can have a polygonal shape, an elliptical shape or any shape suitable for receiving the insulation material. In particular, the cross sectional area can be comprised between 90 mm² and 135 mm², in particular 115 mm².

In another example, the buffer channel comprises an outlet opening located on the first surface for venting gases produced in a space between the water tank and the casing upon generation of an insulating material in said space. In other words, the outlet opening is located on the surface of the cap element material facing outside the casing. Accordingly, the buffer channel acts both as a vent during the curing of the foam and as a buffer zone to compensate for excess foam.

In addition, the buffer channel allows a visual control of the injection by looking at the outside of the channel. Also, it ensures a good venting of the product during the chemical reaction of polymerisation. In addition, thanks to the size of the cross section of the channel, it is possible to check the fulfilling of the product thanks to an indicating tool, for example a graduated needle that indicates the level of foam filling.

In one example, the outlet opening is circular having a diameter comprised between 3 and 10 mm, preferably between 8 mm and 10 mm, in particular 9 mm. The outlet opening can have a different shape. For example, the outlet opening can have a polygonal shape, an elliptical shape or any shape suitable for discharging gas. In particular, the cross sectional area can be comprised between 50 mm² and 80 mm², in particular 65 mm².

In another example, the inlet opening is larger than the outlet opening. Due to the different functions of the openings, the inlet opening being suitable for receiving the insulation material (and also the gas produced in the casing) and the outlet opening being essentially suitably only for discharging the gas, it is important that the inlet opening be larger than the outlet opening. In this way, a great quantity of excess of insulation material can pass through the inlet opening and eventually be buffered inside the channel without exiting the outlet opening.

In an additional example, the buffer channel has a circular cross-section, The absence of corners or cavities inside the channels can favour the insertion of the insulating material.

In order to avoid hindrances for buffering the insulating material in the channel, the buffer channel extends linearly from the first surface to the second surface of the cap element material. In other words, the channel extends straight without deviations passing through the cap element. However, to increase the buffering volume of the channel, the channel can be provided with one or more internal corners.

In another example, the buffer channel comprises an inlet portion, an outlet portion, and a central portion arranged between the inlet portion and the outlet portion, wherein the cross- section from the inlet portion to the outlet portion through the buffer channel is variable. This particular configuration allows a more efficient use of the buffer channel. As a matter of fact, a variable cross-section, for example a reduction of the cross-section passing from the inlet opening to the outlet opening ensures that the insulating material, when inserted into the channel from the inlet opening and proceeding through the channel, is subjected to an increased surface force derived from the internal walls of the buffer channel so that movement of the insulating material through the channel is progressively slowed down until it stops inside the channel without exiting the outlet opening. The inlet portion is formed as an indentation in the cap element material. Likewise, the outlet portion is formed as an indentation in the cap element material. The central portion fluidically connects the inlet portion with the outlet portion.

The cross-section of the central portion can be smaller than the cross-section of the inlet portion and/or the cross- section of the outlet portion. In particular, the cross-section of the central portion can be smaller along its extension, in particular along its full extension, along a length axis of a heating device when the cap element is placed on the heating device than the cross-section of the inlet portion and/or the cross-section of the outlet portion.

In particular, the inlet portion can have a funnel-shaped structure, the outlet portion can have a funnel-shaped structure and the central portion can have a cylindrical-shaped structure. This particular funnel-shaped or conical structure of the inlet portion has the advantage of facilitating the guiding of the insulating material. Similarly, the particular funnel-shaped or conical structure of the outlet portion has the advantage of facilitating the gas discharge.

In an example, in the direction from the inlet portion to the outlet portion, the cross-section of the buffer channel decreases in the inlet portion, is constant in the central portion, and increases in the outlet portion.

In an further example, the inlet portion is longer than the outlet portion. In this way, the insulating material can easily be buffered in the inlet portion.

In an additional example, the cap element can comprises at least two buffer channels, wherein the at least two buffer channels have a total volume of at least 2 cm³, in particular at least 4 cm³. A total volume of all buffer channels (5) of the cap element (1) can be between 0.5 cm³ to 300 cm³, in particular 1 cm³ to 300 cm³. This particular volume of the buffer channels ensures the correct filling of insulating foam in a product. It avoids any mechanical control or rework action to remove the insulating foam overflow as long as the overflow is within the range compatible with the chosen definition.

In another example, in order to evenly distribute the pressure exerted by the insulating material on the cap element, the cap element can comprise a plurality buffer channels, the plurality of buffer channels being evenly distributed in the cap element.

In another aspect of the invention, a heating device, in particular a heat pump water heater, is provided, the heating device comprising:
a casing;
a water tank located in the casing;
an inventive cap element, the cap element being placeable in or on the casing for closing the casing, and
an insulating element arranged in a space between the water tank and the casing.

As discussed above the cap element comprises at least a buffer channel, in particular having a cross sectional area of the buffer channel greater than 10 mm² and in particular ranging between 10 mm² and 115 mm² and having an inlet opening configured to receive excess of insulating material coming from the space upon generation of said insulating material in said space.

In a further aspect of the invention, a use of the inventive cap element is provided. The inventive cap element is used in a heating device, in particular a heat pump water heater.

In the figures, the subject-matter of the invention is schematically shown, wherein identical or similarly acting elements are usually provided with the same reference signs.
- Figures 1A-C: show a schematic representation of a heating device system according to an example.
- Figures 2A-B: show a perspective view of the cap element and its cross section according to an example.
- Figures 3A-B: show a schematic representation of the maximum volume of foam stuck in the channel (A) as well as the buffer channel (B) according to an example.

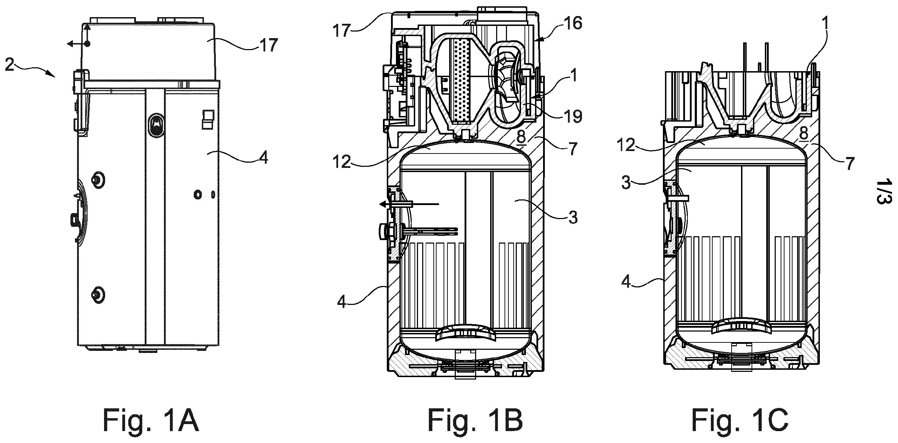

Figures 1A-1C illustrate a heating device system comprising a heating device 2. The heating device 2, in particular an insulated heat pump water heater, has a heat pump 16 located on the top of a casing 4 and a water tank 3 located inside the casing 4 below the heat pump 16. In particular, the heat pump 16 is supported by a cap element 1 of the heating device system wherein the cap element 1 serves as top closing element of the casing 4. In particular, the heat pump components are arranged on the cap element 1, in particular on a cap element material 19 of the cap element 1. As shown in figure 1A, the device 2 can be provided with an external cap 17 coupable with the casing 4 to cover the heat pump 16. Figure 1B is a cross section of figure 1A and figure 1C is a cross section of figure 1A without the heat pump 16 located on the cap element 1.

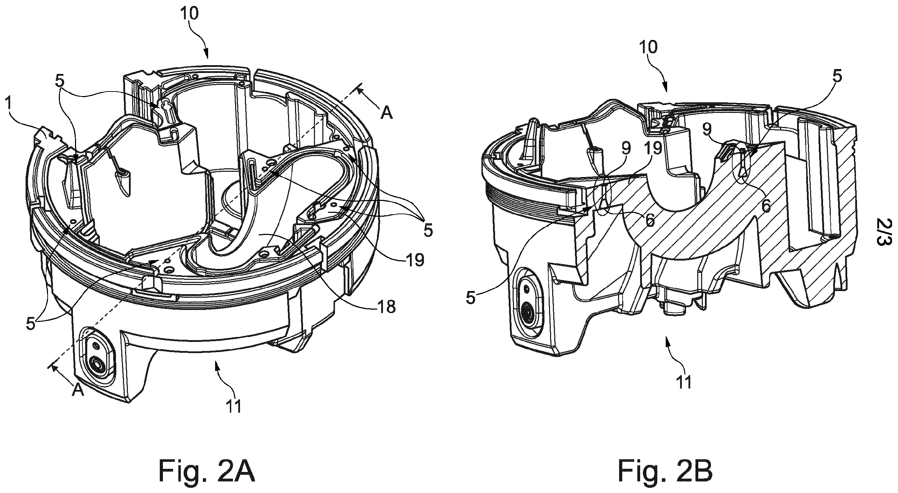

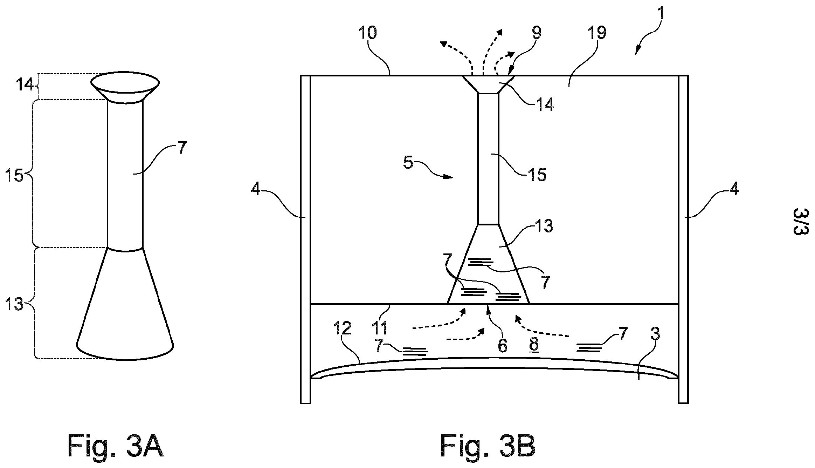

The insulated heat pump water heater 2 has a water tank 3 located in the casing assembly 4 and an insulating material 7 injected in the space 8 between the tank 3 and the casing 4. The casing assembly 4 consists of at least a top, a bottom and a periphery, the positions being at the time of the injection station of an insulating material (e.g. foam) 7. The upper part of the casing 4 is provided with a cap element 1 incorporating at least two buffer channels 5 (not shown in the figure). The buffer channels 5 act as vents to allow gas to escape during the polymerisation reaction of the insulation and as buffer regions to compensate for excess foam. The buffer channels 5 have an inlet opening 6 on the injection side (upper portion 12 of the tank 3) and an outlet opening on the other side of the top of the casing 4. When the insulating material 7 fills the space 8 between the water tank 3 and the casing 4, the excess of insulating material 7 can be received by the buffer channels 5 through the inlet opening 6. A detailed description of the structure of the buffer channel 5 is shown in figures 2A-2B as well as in figures 3A-3B.

Figure 2A shows a perspective top view of the cap element 1. The cap element 1 has a first surface 10 and a second surface 11. It is noted that this cap element 1, on the first surface 10, is the support for a heat pump 16. As a matter of fact, a dedicated seat for the heat exchanger and a dedicated seat for the fan element 18 are provided on the first surface 10.

The cap element 1 comprises a plurality of buffer channels 5. Figure 2A shows the presence of seven buffer channels 5. These channels 5 are through-holes extending from the first surface 10 to the second surface 11 of the cap element material 19. The buffer channels 5 are basically distributed on the edge of the cap element 5. However, some of the buffer channels 5 are also provided in other locations, for example close to the seat of the fan element 18.

Figure 2B illustrates a cross section of the cap element 1 of figure 2A along the line A-A. As shown in this figure, the buffer channels 5 (encircled in the figure) provide a passage through portions of the cap element material 19 from the second surface 11 to the first surface 10.

Figures 3A and 3B illustrate in detail the shape of the maximum insulating material 7 stuck in the buffer channel 5 (Fig. 3A) and the shape of a buffer channel 5 present in a cap element 1 (Fig. 3B). The channel 5 has a longitudinal structure comprising an inlet portion 13, the inlet portion 13 being provided with a circular inlet opening 6, an outlet portion 14, the outlet portion 14 being provided with a circular outlet opening 9, and a central portion 15 connecting the inlet portion 13 to the outlet portion 14. The portions of the buffer channel 5 are shown with reference to figure 3A for clarity reasons.

The central portion 15 has a cylindrical shape, whereas both the inlet portion 1 and the outlet portion 14 have a conical or funnel-like shape. It is noted that circular inlet opening 6 has a larger diameter than the circular outlet opening 9 and that the funnel-shape structure of the inlet portion 13 is oriented opposite to the funnel-shape structure of the outlet portion 14. In other words, the cross section at the outlet opening 9 is larger than the cross section at the corresponding conjunction point with the central portion 15 and the cross section at the inlet opening 6 is larger than the cross section at the corresponding conjunction point with the central portion 15. The inlet portion 13 is longer that the outlet portion 14, in particular, the inlet portion 13 can be six times longer than the outlet portion 14. For example, the inlet portion 13 can have a length comprised between 14 mm and 16 mm, in particular 15 mm, whereas the outlet portion 14 can have a length comprised between 2 mm and 3 mm, in particular 2.5 mm. The particular relationship between dimensions of the inlet portion 13 and the outlet portion 14 makes the buffer channel 5 more efficient in buffering insulating material 7. On the other hand, the central portion 15 can have a length comprised between 22 mm and 23 mm, in particular 22.5 mm. Accordingly, the total length of the buffer channel 5 can be comprised between 38mm and 42 mm, in particular 40 mm. In order to improve the efficacy of the buffer channel 5 for discharging gas, the ratio between the length of the central portion 15 and the total length of the channel 5 is comprised between 0.55 and 0.57, in particular 0.56. In other words, more than half of the total length of the buffer channel 5 is constituted by the central portion 15.

Figure 3B illustrates the functioning of the buffer channel 5 as gas vent and as buffer volume. As schematically shown in figure 3B, the buffer channel 5 is located between the first surface 10 and the second surface 11 of the cap element 1, thereby forming a straight through-channel. The inlet opening 6 is located on the second surface 11 facing the water tank 3, in particular the upper portion 12 of the tank 3. The outlet opening 9 is located on the first surface 10 opposite the second surface 11 and facing outside the casing 4. When forming the insulating material 7, gas is produced in the space 8 between the casing 4 and the tank 3. The gas is illustrated in the figure with dashed arrows. Thanks to the presence of the buffer channel 5, the gas can easily be discharged outside passing from the inlet opening 6, through the inlet portion 13, the central portion 15, the outlet portion 14, and exiting the outlet opening 9. Once the insulating material 7 reaches the top of the casing 4, the excess of insulating material 7 can be received by the buffer channel 5, in particular by the inlet portion 13 of the buffer channel 5. In this way, excess of insulating material 7 is buffered in the channel 5, thereby avoiding the problem related to a refinement of foam due to over-injection. It is noted that the presence of an inlet opening 6 and outlet opening 9 along a straight longitudinal structure allows visible accessibility from outside for inspection inside the casing 4 as well as the possibility of inserting an indicating tool for checking the fulfilling of the product.

Each of the buffer channels 5 discussed above has a volume in the range between 0,5 cm³ to 20 cm³, in particular 0,5 cm³ to 12 cm³, in particular 1 cm³ to 8 cm³ for receiving foam.

### Reference Signs

- 1: Cap element
- 2: Heating device
- 3: Water tank
- 4: Casing
- 5: Buffer channel
- 6: Inlet opening
- 7: Insulating material
- 8: Space
- 9: Outlet opening
- 10: First surface
- 11: Second surface
- 12: Upper portion of the tank
- 13: Inlet portion
- 14: Outlet portion
- 15: Central portion
- 16: Heat pump
- 17: External cap
- 18: Seat for fan element
- 19: cap element material

## Claims

1. Cap element (1) for a heating device (2), the heating device (2) including a water tank (3) located in a casing (4), wherein the cap element (1) is placeable in or on the casing (4) for closing said casing (4), **characterised in that** the cap element (1) comprises:
at least a buffer channel (5), to buffer and compensate for injection volume differences during insulation of the heating device (2) by injection of insulation foam between the water tank (3) and the casing (4), and extending through a cap element material (19) from a first surface (10) to a second surface (11) of the cap element material (19), the second surface (11) facing the water tank (3), wherein the buffer channel (5) has a volume in the range between 0,5 cm³ to 20 cm³, in particular 0,5 cm³ to 12 cm³, in particular 1 cm³ to 8 cm³.

2. Cap element (1) according to claim 1, **characterized in that**
a. a cross sectional area of the buffer channel (5) is greater than 10 mm², in particular ranges between 10 mm² and 115 mm² and/or **in that**
b. the buffer channel comprises an inlet opening (6), wherein the inlet opening (6) of the buffer channel (5) is circular having a diameter comprised between 3 and 13 mm, preferably between 11 mm and 13 mm, in particular 12 mm.

3. Cap element (1) according to any one of claims 1 to 2, **characterized in that** the buffer channel (5) comprises an outlet opening (9) located on the first surface (10) for venting gases produced in a space (8) between the water tank (3) and the casing (4) upon generation of an insulating material (7) in said space (8).

4. Cap element (1) according to claim 3, **characterized in that** the outlet opening is circular having a diameter comprised between 3 and 10 mm, preferably between 8 mm and 10 mm, in particular 9 mm.

5. Cap element (1) according to any one of claims 3 to 4 when claim 3 is at least dependent upon claim 2(b), **characterized in that** the inlet opening (6) is larger than the outlet opening (9).

6. Cap element (1) according to any one of claims 1 to 5, **characterized in that** the buffer channel (5) has a circular cross-section.

7. Cap element (1) according to any one of claims 1 to 6, **characterized in that** the buffer channel (5) extends linearly from the first surface (10) to the second surface (11) of the cap element (1).

8. Cap element (1) according to any one of claims 1 to 7, **characterized in that** the buffer channel (5) comprises an inlet portion (13), an outlet portion (14), and a central portion (15) arranged between the inlet portion (13) and the outlet portion (14), wherein
a. the cross- section from the inlet portion (13) to the outlet portion (14) through the buffer channel (1) is variable and/or wherein
b. the cross- section from the central portion (15) .is smaller than the cross-section of the inlet portion (13) and/or the cross- section of the outlet portion (14).

9. Cap element (1) according to claim 8, **characterized in that**
a. the inlet portion (13) has a funnel-shaped structure; and/or
b. the outlet portion (14) has a funnel-shaped structure; and/or
c. the central portion (15) has a cylindrical-shaped structure.

10. Cap element (1) according to any one of claims 8 to 9, **characterized in that**, in the direction from the inlet portion (13) to the outlet portion (14), the cross-section of the buffer channel (1) decreases in the inlet portion (13), is constant in the central portion (15), and increases in the outlet portion (14).

11. Cap element (1) according to any one of claims 8 to 10, **characterized in that** the inlet portion (13) is longer than the outlet portion (14).

12. Cap element (1) according to any one of claims 1 to 11, **characterized in that**
a. the cap element (1) comprises at least two buffer channels (5), in particular at least five buffer channels (5), wherein the buffer channels (5) have a total volume of at least 2 cm³, in particular at least 4 cm³ and/or **in that**
b. a total volume of all buffer channels (5) of the cap element (1) is between 0.5 cm³ to 300 cm³, in particular 1 cm³ to 300 cm³.

13. Cap element (1) according to any one of claims 1 to 12, **characterized in that** the cap element (1) comprises a plurality buffer channels (5), the plurality of buffer channels (5) being evenly distributed in the cap element (1).

14. Heating device system with
a heating device (2), in particular a heat pump water heater, comprising:
a casing (4);
a water tank (3) located in the casing (4) and
an insulating element (7) arranged in a space (8) between the water tank (3) and
the casing (4), wherein the heating device system further comprises
a cap element (1) according to any one of claims 1 to 13, the cap element being placeable in or on the casing (4) for closing said casing (4).

15. Use of the cap element (1) according to one of clams 1 to 13 in a heating device, in particular a heat pump water heater.

## Patentansprüche

1. Deckelelement (1) für eine Heizvorrichtung (2), wobei die Heizvorrichtung (2) einen in einem Gehäuse (4) angeordneten Wassertank (3) umfasst, wobei das Deckelelement (1) zum Verschließen des Gehäuses (4) in oder auf dem Gehäuse (4) platzierbar ist, **dadurch gekennzeichnet, dass** das Deckelelement (1) umfasst:
mindestens einen Pufferkanal (5) zum Puffern und Ausgleichen von Einspritzvolumenunterschieden während der Isolierung der Heizvorrichtung (2) durch Einspritzen von Isolierschaum zwischen dem Wassertank (3) und dem Gehäuse (4), wobei sich der Pufferkanal (5) durch ein Deckelelementmaterial (19) von einer ersten Oberfläche (10) zu einer zweiten Oberfläche (11) des Deckelelementmaterials (19) erstreckt, wobei die zweite Oberfläche (11) dem Wassertank (3) zugewandt ist, wobei der Pufferkanal (5) ein Volumen im Bereich von 0,5 cm³ bis 20 cm³, insbesondere 0,5 cm³ bis 12 cm³, insbesondere 1 cm³ bis 8 cm³, aufweist.

2. Deckelelement (1) nach Anspruch 1, **dadurch gekennzeichnet, dass**
a. eine Querschnittsfläche des Pufferkanals (5) größer als 10 mm² ist, insbesondere zwischen 10 mm² und 115 mm² liegt, und/oder dadurch, dass
b. der Pufferkanal eine Einlassöffnung (6) umfasst, wobei die Einlassöffnung (6) des Pufferkanals (5) kreisförmig ist und einen Durchmesser zwischen 3 und 13 mm, vorzugsweise zwischen 11 mm und 13 mm, insbesondere 12 mm, aufweist.

3. Deckelelement (1) nach einem der Ansprüche 1 bis 2, **dadurch gekennzeichnet, dass** der Pufferkanal (5) eine Auslassöffnung (9) umfasst, die auf der ersten Oberfläche (10) angeordnet ist, um Gase abzuführen, die in einem Raum (8) zwischen dem Wassertank (3) und dem Gehäuse (4) bei der Erzeugung eines Isoliermaterials (7) in diesem Raum (8) entstehen.

4. Deckelelement (1) nach Anspruch 3, **dadurch gekennzeichnet, dass** die Auslassöffnung kreisförmig ist und einen Durchmesser zwischen 3 und 10 mm, vorzugsweise zwischen 8 mm und 10 mm, insbesondere 9 mm, aufweist.

5. Deckelelement (1) nach einem der Ansprüche 3 bis 4, wobei Anspruch 3 mindestens von Anspruch 2(b) abhängig ist, **dadurch gekennzeichnet, dass** die Einlassöffnung (6) größer als die Auslassöffnung (9) ist.

6. Deckelelement (1) nach einem der Ansprüche 1 bis 5, **dadurch gekennzeichnet, dass** der Pufferkanal (5) einen kreisförmigen Querschnitt aufweist.

7. Deckelelement (1) nach einem der Ansprüche 1 bis 6, **dadurch gekennzeichnet, dass** sich der Pufferkanal (5) linear von der ersten Oberfläche (10) zur zweiten Oberfläche (11) des Deckelelements (1) erstreckt.

8. Deckelelement (1) nach einem der Ansprüche 1 bis 7, **dadurch gekennzeichnet, dass** der Pufferkanal (5) einen Einlassabschnitt (13), einen Auslassabschnitt (14) und einen zwischen dem Einlassabschnitt (13) und dem Auslassabschnitt (14) angeordneten Mittelabschnitt (15) umfasst, wobei
a. der Querschnitt vom Einlassabschnitt (13) zum Auslassabschnitt (14) durch den Pufferkanal (1) variabel ist und/oder wobei
b. der Querschnitt des Mittelabschnitts (15) kleiner als der Querschnitt des Einlassabschnitts (13) und/oder der Querschnitt des Auslassabschnitts (14) ist.

9. Deckelelement (1) nach Anspruch 8, **dadurch gekennzeichnet, dass**
a. der Einlassabschnitt (13) eine trichterförmige Struktur aufweist; und/oder
b. der Auslassabschnitt (14) eine trichterförmige Struktur aufweist; und/oder
c. der Mittelabschnitt (15) eine zylinderförmige Struktur aufweist.

10. Deckelelement (1) nach einem der Ansprüche 8 bis 9, **dadurch gekennzeichnet, dass** in Richtung vom Einlassabschnitt (13) zum Auslassabschnitt (14) der Querschnitt des Pufferkanals (1) im Einlassabschnitt (13) abnimmt, im Mittelabschnitt (15) konstant ist und im Auslassabschnitt (14) zunimmt.

11. Deckelelement (1) nach einem der Ansprüche 8 bis 10, **dadurch gekennzeichnet, dass** der Einlassabschnitt (13) länger als der Auslassabschnitt (14) ist.

12. Deckelelement (1) nach einem der Ansprüche 1 bis 11, **dadurch gekennzeichnet, dass**
a. das Deckelelement (1) mindestens zwei Pufferkanäle (5) umfasst, insbesondere mindestens fünf Pufferkanäle (5), wobei die Pufferkanäle (5) ein Gesamtvolumen von mindestens 2 cm³, insbesondere mindestens 4 cm³, aufweisen und/oder
b. das Gesamtvolumen aller Pufferkanäle (5) des Deckelelements (1) zwischen 0,5 cm³ und 300 cm³, insbesondere zwischen 1 cm³ und 300 cm³, liegt.

13. Deckelelement (1) nach einem der Ansprüche 1 bis 12, **dadurch gekennzeichnet, dass** das Deckelelement (1) eine Vielzahl von Pufferkanälen (5) umfasst, wobei die Vielzahl von Pufferkanälen (5) gleichmäßig im Deckelelement (1) verteilt ist.

14. Heizvorrichtungssystem mit
einer Heizvorrichtung (2), insbesondere einem Wärmepumpen-Warmwasserbereiter,
umfassend:
ein Gehäuse (4);
einen im Gehäuse (4) angeordneten Wassertank (3) und
ein Isolierelement (7), das in einem Raum (8) zwischen dem Wassertank (3) und dem
Gehäuse (4) angeordnet ist, wobei das Heizvorrichtungssystem ferner umfasst
ein Deckelelement (1) nach einem der Ansprüche 1 bis 13, wobei das Deckelelement zum Verschließen des Gehäuses (4) in oder auf dem Gehäuse (4) platzierbar ist.

15. Verwendung des Deckelelements (1) nach einem der Ansprüche 1 bis 13 in einer Heizvorrichtung, insbesondere in einem Wärmepumpen-Warmwasserbereiter.

## Revendications

1. Élément de capot (1) pour un dispositif de chauffage (2), le dispositif de chauffage (2) comprenant un réservoir d'eau (3) situé dans une enveloppe (4), l'élément de capot (1) pouvant être placé dans ou sur l'enveloppe (4) pour fermer ladite enveloppe (4), **caractérisé en ce que** l'élément de capot (1) comprend :
au moins un canal tampon (5), destiné à amortir et compenser les différences de volume d'injection lors de l'isolation du dispositif de chauffage (2) par injection de mousse isolante entre le réservoir d'eau (3) et l'enveloppe (4), et s'étendant à travers un matériau d'élément de capot (19), d'une première surface (10) à une seconde surface (11) du matériau d'élément de capot (19), la seconde surface (11) faisant face au réservoir d'eau (3), dans lequel le canal tampon (5) a un volume dans la plage allant de 0,5 cm³ à 20 cm³, en particulier de 0,5 cm³ à 12 cm³, et en particulier de 1 cm³ à 8 cm³.

2. Élément de capot (1) selon la revendication 1, **caractérisé en ce que**
a. une section transversale du canal tampon (5) est supérieure à 10 mm², en particulier étant comprise entre 10 mm² et 115 mm² et/ou **en ce que**
b. le canal tampon comprend une ouverture d'entrée (6), dans lequel l'ouverture d'entrée (6) du canal tampon (5) est circulaire et a un diamètre compris entre 3 mm et 13 mm, de préférence entre 11 mm et 13 mm, en particulier 12 mm.

3. Élément de capot (1) selon l'une quelconque des revendications 1 à 2, **caractérisé en ce que** le canal tampon (5) comprend une ouverture de sortie (9) située sur la première surface (10) pour évacuer les gaz produits dans un espace (8) entre le réservoir d'eau (3) et l'enveloppe (4) lors de la génération d'un matériau isolant (7) dans ledit espace (8).

4. Élément de capot (1) selon la revendication 3, **caractérisé en ce que** l'ouverture de sortie est circulaire et a un diamètre compris entre 3 mm et 10 mm, de préférence entre 8 mm et 10 mm, en particulier 9 mm.

5. Élément de capot (1) selon l'une quelconque des revendications 3 à 4 lorsque la revendication 3 dépend au moins de la revendication 2(b), **caractérisé en ce que** l'ouverture d'entrée (6) est supérieure à l'ouverture de sortie (9).

6. Élément de capot (1) selon l'une quelconque des revendications 1 à 5, **caractérisé en ce que** le canal tampon (5) a une section transversale circulaire.

7. Élément de capot (1) selon l'une quelconque des revendications 1 à 6, **caractérisé en ce que** le canal tampon (5) s'étend linéairement, de la première surface (10) à la seconde surface (11) de l'élément de capot (1).

8. Élément de capot (1) selon l'une quelconque des revendications 1 à 7, **caractérisé en ce que** le canal tampon (5) comprend une portion d'entrée (13), une portion de sortie (14) et une portion centrale (15) disposée entre la portion d'entrée (13) et la portion de sortie (14), dans lequel
a. la section transversale de la portion d'entrée (13) à la portion de sortie (14) à travers le canal tampon (1) est variable et/ou dans lequel
b. la section transversale de la portion centrale (15) est inférieure à la section transversale de la portion d'entrée (13) et/ou à la section transversale de la portion de sortie (14).

9. Élément de capot (1) selon la revendication 8, **caractérisé en ce que**
a. la portion d'entrée (13) se présente sous forme d'une structure en entonnoir ; et/ou
b. la portion de sortie (14) se présente sous forme d'une structure en entonnoir ; et/ou
c. la portion centrale (15) se présente sous forme d'une structure cylindrique.

10. Élément de capot (1) selon l'une quelconque des revendications 8 à 9, **caractérisé en ce que**, dans la direction allant de la portion d'entrée (13) à la portion de sortie (14), la section transversale du canal tampon (1) diminue dans la portion d'entrée (13), est constante dans la portion centrale (15) et augmente dans la portion de sortie (14).

11. Élément de capot (1) selon l'une quelconque des revendications 8 à 10, **caractérisé en ce que** la portion d'entrée (13) est plus longue que la portion de sortie (14).

12. Élément de capot (1) selon l'une quelconque des revendications 1 à 11, **caractérisé en ce que**
a. l'élément de capot (1) comprend au moins deux canaux tampons (5), en particulier au moins cinq canaux tampons (5), dans lequel les canaux tampons (5) ont un volume total d'au moins 2 cm³, en particulier d'au moins 4 cm³ et/ou **en ce que**
b. un volume total de tous les canaux tampons (5) de l'élément de capot (1) est compris entre 0,5 cm³ et 300 cm³, en particulier entre 1 cm³ et 300 cm³.

13. Élément de capot (1) selon l'une quelconque des revendications 1 à 12, **caractérisé en ce que** l'élément de capot (1) comprend une pluralité de canaux tampons (5), la pluralité de canaux tampons (5) étant uniformément répartis dans l'élément de capot (1).

14. Système de dispositif de chauffage équipé
d'un dispositif de chauffage (2), en particulier d'un chauffe-eau de pompe à chaleur, comprenant :
une enveloppe (4) ;
un réservoir d'eau (3) situé dans l'enveloppe (4) et
un élément isolant (7) disposé dans un espace (8) entre le réservoir d'eau (3) et
l'enveloppe (4), le système de dispositif de chauffage comprenant en outre
un élément de capot (1) selon l'une quelconque des revendications 1 à 13, l'élément de capot pouvant être placé dans ou sur l'enveloppe (4) pour fermer ladite enveloppe (4).

15. Utilisation de l'élément de capot (1) selon l'une des revendications 1 à 13 dans un dispositif de chauffage, en particulier un chauffe-eau de pompe à chaleur.
